# EUROPÄISCHE PATENTANMELDUNG

(11) **EP 1 277 934 A2**
(43) Veröffentlichungstag der Anmeldung: **22.01.2003**
(21) Anmeldenummer: 02015292.2
(22) Anmeldetag: 10.07.2002
(51) Int. Cl.: F02B 27/02

(54) **Ansaugvorrichtung für einen mehrzylindrigen Verbrennungsmotor**

(30) Priorität: 17.07.2001 DE 10134850
(71) Anmelder: FILTERWERK MANN & HUMMEL GMBH, 71638 Ludwigsburg (DE)
(72) Erfinder: Spannbauer, Helmut, 71696 M-glingen (DE)
(74) Vertreter: Voth, Gerhard, Dipl.-Ing.

(57) **Zusammenfassung**

Die Erfindung betrifft eine Ansaugvorrichtung für einen mehrzylindrigen Verbrennungsmotor, bei der ein veränderlicher Ansaugweg zwischen den unterschiedlichen Zylindern (1 bis 6) des Verbrennungsmotors mit einer symmetrischen Zylinderanordnung (1,2,3) und (4,5,6) einer für alle Zylinder (1 bis 6) gemeinsamen Drosselklappe (7) vorhanden ist. Zwischen den symmetrischen Gruppen der Zylinder (1 bis 6) ist eine Trennwand (8) angeordnet, die an ihrem der gemeinsamen Drosselklappe (7) gegenüberliegenden Ende mit einer Schaltklappe (8) versehen ist, so dass in einer Schaltstellung der Schaltklappe (9) einer Gruppe (1,2,3) der symmetrischen Zylinderanordnung (1 bis 6) der direkte Ansaugweg zur Drosselklappe (7) verschlossen ist und somit eine Reihenanordnung aller Ansaugwege beider Zylindergruppen (1,2,3) und (4,5,6) bewirkt ist und in der anderen Schaltstellung beide Zylindergruppen (1,2,3) und (4,5,6) symmetrische Ansaugwege aufweisen.

## Beschreibung

### Stand der Technik

Die Erfindung betrifft eine Ansaugvorrichtung für einen mehrzylindrigen Verbrennungsmotor, insbesondere in einer V-Anordnung der einzelnen Zylinder, nach dem Oberbegriff des Hauptanspruchs.

Bei Verbrennungsmotoren für Kraftfahrzeuge werden zur Erzielung eines optimalen Betriebsverhaltens oder zur Erzeilung eines bestimmten Geräuschverhaltens Ansaugsysteme bevorzugt, die keine starre Ansaugwege aufweisen sondern eine Anpassung an unterschiedliche Anforderungen des Motorbetriebs gestatten.

Aus der JP 06 330 756 A ist eine Ansaugvorrichtung bekannt, bei der zur Anpassung der Ansaugwege bzw. des Ansaugvolumens an unterschiedliche Drehzahlen des Verbrennungsmotors ein Bauelement vorgesehen ist, das jeweils für eine Gruppe von Zylindern Ansaugpfade vorsieht, die mit steuerbaren Klappen in ihrer Länge verändert werden können. Die Klappen sind so gesteuert, dass sie in Abhängigkeit von der Drehzahl des Verbrennungsmotors von der geschlossenen Stellung bei niedrigen Drehzahlen bis zu vollständigen Öffnung bei hohen Drehzahlen mit einem entsprechend kurzem Ansaugweg schaltbar sind.

Es ist weiterhin auch eine Ansaugvorrichtung für einen Verbrennungsmotor aus der DE-OS 40 41 786 bekannt, bei der zur Variierung der Durchtrittsöffnung, durch die die angesaugte Luft strömt, ein steuerbares Absperrorgan vorhanden ist. Das Absperrorgan befindet sich in einem zwischen zwei Ansaugkanälen befindlichen Querkanal und wird durch Steuerbefehle einer Steuerelektronik geöffnet oder geschlossen. Die Steuerbefehle sind abhängig von der Drehzahl des Verbrennungsmotors und von der Temperatur der Außenluft, die mit einem Temperaturfühler ermittelt wird.

Die Ansaugvorrichtungen haben durch ihren symmetrischen oder unsymmetrischen Aufbau in Abhängigkeit von der Motorkonstruktion, einen großen Einfluss auf das Ansauggeräusch. Unsymmetrische Ansaugrohre, die in der Regel bei Reihenmotoren angewendet werden, haben dabei durch die unterschiedlich langen Laufzeiten der Saugpulse der Zylinder zum gemeinsamen Sammelpunkt am Drosselklappensteller einen eher rauen bzw. auch sportlichen Klang. Symmetrische Ansaugvorrichtungen werden dagegen z.B. bei sogenannten V-Motoren angewandt; sie haben konstruktiv bedingt geringere Laufzeitunterschiede der Saugpulse, so dass sich hier ein eher komfortabler Klang ergibt.

### Aufgabenstellung

Der Erfindung liegt die Aufgabe zugrunde, eine Ansaugvorrichtung für einen Verbrennungsmotor nach dem Oberbegriff des Hauptanspruchs so fortzubilden, dass bei einem Verbrennungsmotor mit symmetrischer Zylinderanordnung auf einfache Weise eine veränderliche Geräuschstruktur herbeiführbar ist.

### Vorteile der Erfindung

Die erfindungsgemäße Ansaugvorrichtung für einen mehrzylindrigen Verbrennungsmotor, mit einem veränderlichen Ansaugweg zwischen den unterschiedlichen Zylindern des Verbrennungsmotors und einem für alle Zylinder gemeinsamen Drosselklappensteller, löst die gestellte Aufgabe mit den im Kennzeichen des Hauptanspruchs angegebenen Merkmalen.

Vorteilhaft ist die erfindungsgemäße Ansaugvorrichtung dadurch, dass zwischen den symmetrischen Gruppen der Zylinder eine Trennwand angeordnet ist, die an ihrem der gemeinsamen Drosselklappe gegenüberliegenden Ende mit einer Schaltklappe versehen ist. Auf einfache Weise kann dann in einer Schaltstellung der Schaltklappe einer Gruppe der symmetrischen Zylinderanordnung, vorzugsweise mit einer symmetrischen V-Anordnung der Zylinder, der direkte Ansaugweg zum Drosselklappensteller verschlossen werden, so dass eine Reihenanordnung aller Ansaugwege beider Zylindergruppen entstanden ist. In der anderen Schaltstellung weisen dagegen beide Zylindergruppen symmetrische Ansaugwege auf.

Die symmetrische Ansaugvorrichtung wird damit auf einfache Weise durch eine Mittelwand geteilt und erhält mit der erfindungsgemäßen Schaltklappe eine sogenannten Klang- oder Soundklappe.

Vorteilhaft ist auch, dass beispielsweise jeweils eine Schaltstellung in Abhängigkeit von der Fahrzeugart, z.B. Sport- oder Komfortfahrzeug, beim Einbau des Verbrennungsmotors fest installiert sein kann. Anderseits können die Schaltstellungen während des Betriebs des Verbrennungsmotors vom Fahrer des Fahrzeugs, in dem sich der Verbrennungsmotor befindet, auch frei wählbar sein. Bei bestimmten Betriebszuständen kann eine Umschaltung von sportlichem Geräusch auf ein mehr komfortables Geräusch erfolgen, beispielsweise nach der Beschleunigung mit einem sportlichem Geräusch auf ein komfortables Geräusch bei einer Konstantfahrt. Möglich ist es aber auch, dass die Schaltstellungen während des Betriebs des Verbrennungsmotors in Abhängigkeit von der Drehzahl des Verbrennungsmotor automatisch gesteuert werden.

### Zeichnung

Ein Ausführungsbeispiel der erfindungsgemäßen Ansaugvorrichtung wird anhand der Zeichnung erläutert. Es zeigen:
Figur 1 eine Prinzipdarstellung einer Ansaugvorrichtung für einen Reihenmotor zur Erläuterung der Ansaugwege,
Figur 2 eine Prinzipdarstellung einer Ansaugvorrichtung für einen 6-Zylinder V-Motor zur Erläuterung der Ansaugwege,
Figur 3 eine Prinzipdarstellung einer Ansaugvorrichtung für einen 6-Zylinder V-Motor und mit einer erfindungsgemäßen Mittelwand und mit einer ersten Schaltstellung einer Schaltklappe und
Figur 4 eine Ansaugvorrichtung wie nach der Figur 3 mit der Schaltklappe in einer zweiten Schaltstellung.

### Beschreibung des Ausführungsbeispiels

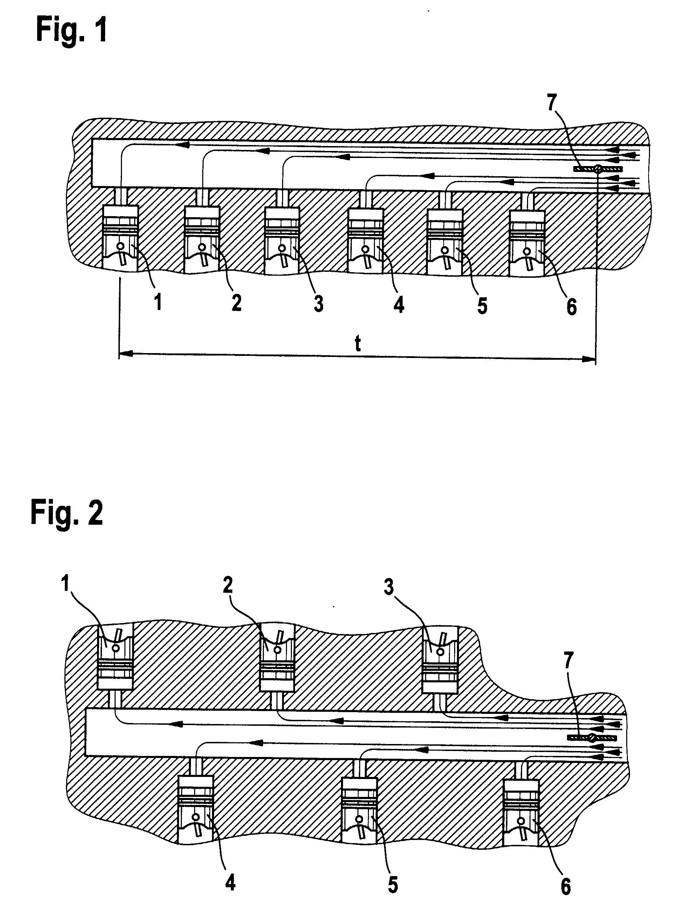

In Figur 1 ist prinzipiell eine Ansaugvorrichtung für einen hier nicht dargestellten Verbrennungsmotor gezeigt, bei der Zylinder 1 bis 6 eines Reihenmotors und eine Drosselklappe 7, durch die die Ansaugung der Luft für die Verbrennung in den Zylindern 1 bis 6 erfolgt, angedeutet sind. Die Laufzeiten der Saugpulse von den Zylindern 1 bis 6 bis zur Drosselklappe 7 sind hier durch entsprechende Linien gekennzeichnet, wobei hier die längste Laufzeit t des Saugpulses vom Zylinder 1 bis zur Drosselklappe 7 ist. Bei dem Reihenmotor nach der Figur 1 führen dann die unterschiedlich langen Laufzeiten der Saugpulse eines jeden Zylinders 1 bis 6 zum gemeinsamen Sammelpunkt an der Drosselklappe 7 zu einem eher rauen bzw. auch sportlichen Klang.

Aus Figur 2 sind im Unterschied zur Figur 1 die Laufzeiten der einzelnen Zylinder 1 bis 6 zum Sammelpunkt bei der Drosselklappe 7 bei einem 6-Zylinder V-Motor zu entnehmen. Hieraus ist erkennbar, dass die einzelnen Saugpulse konstruktiv bedingt wesentlich geringere Laufzeitunterschiede der Zylinder 1 bis 6 aufweisen, so dass sich hier ein leiser eher komfortabler Klang ergibt.

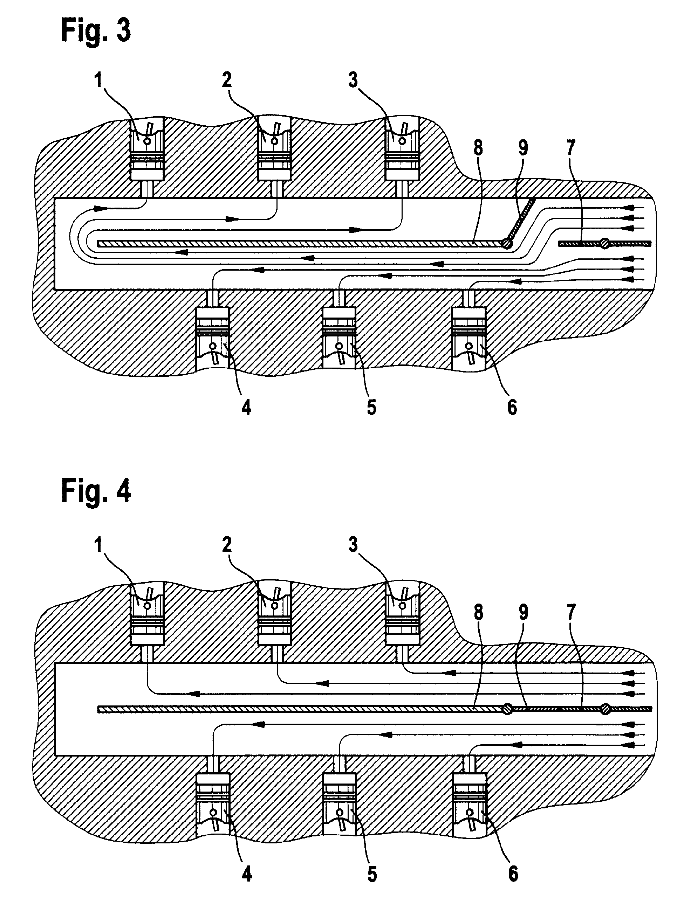

Bei einer erfindungsgemäßen Anordnung nach Figur 3 ist zwischen den symmetrischen Gruppen der Zylinder 1 bis 3 und der Zylinder 4 bis 6 eine Trennwand 8 angeordnet ist, die an ihrem der gemeinsamen Drosselklappe 7 gegenüberliegenden Ende mit einer Schaltklappe 9 versehen ist. Mit der aus der Figur 3 zu entnehmenden Schaltstellung der Schaltklappe 9 ist für die Gruppe der Zylinder 1 bis 3 der direkte Ansaugweg zur Drosselklappe 7 verschlossen ist und somit ergeben sich hier Laufzeiten der Saugpulse, die einer Reihenanordnung der Zylinder 3,2,1,4,5,6 entspricht.

In der anderen aus Figur 4 zu entnehmenden Schaltstellung der Schaltklappe 9 weisen die beiden Zylindergruppen 1 bis 3 und 4 bis 6 symmetrische Ansaugwege auf, so dass die Laufzeiten der Saugpulse im Prinzip denen nach der Figur 2 entsprechen.

## Patentansprüche

1. Ansaugvorrichtung für einen mehrzylindrigen Verbrennungsmotor
- bei der ein veränderlicher Ansaugweg zwischen den unterschiedlichen Zylindern (1 bis 6) des Verbrennungsmotors mit einer symmetrischen Zylinderanordnung (1,2,3) und (4,5,6) einer für alle Zylinder (1 bis 6) gemeinsamen Drosselklappe (7) vorhanden ist, **dadurch gekennzeichnet, dass**
- zwischen den symmetrischen Gruppen der Zylinder (1 bis 6) eine Trennwand (8) angeordnet ist, die an ihrem der gemeinsamen Drosselklappe (7) gegenüberliegenden Ende mit einer Schaltklappe (8) versehen ist, so dass
- in einer Schaltstellung der Schaltklappe (9) einer Gruppe (1,2,3) der symmetrischen Zylinderanordnung (1 bis 6) der direkte Ansaugweg zur Drosselklappe (7) verschlossen ist und somit eine Reihenanordnung aller Ansaugwege beider Zylindergruppen (1,2,3) und (4,5,6) bewirkt ist und in der anderen Schaltstellung beide Zylindergruppen (1,2,3) und (4,5,6) symmetrische Ansaugwege aufweisen.

2. Ansaugvorrichtung nach Anspruch 1, dadurch gekennzeichnet, dass
- die Ansaugvorrichtung an einem Verbrennungsmotor mit einer symmetrischen V-Anordnung der Zylinder (1 bis 6) angebracht ist.

3. Ansaugvorrichtung nach Anspruch 1 oder 2, **dadurch gekennzeichnet, dass**
- jeweils eine Schaltstellung in Abhängigkeit von der Fahrzeugart beim Einbau des Verbrennungsmotors fest installiert ist.

4. Ansaugvorrichtung nach Anspruch 1 oder 2, **dadurch gekennzeichnet, dass**
- die Schaltstellungen während des Betriebs des Verbrennungsmotors vom Fahrer des Fahrzeugs in dem sich der Verbrennungsmotor befindet frei wählbar ist.

5. Ansaugvorrichtung nach Anspruch 1 oder 2, **dadurch gekennzeichnet, dass**
- die Schaltstellungen während des Betriebs des Verbrennungsmotors in Abhängigkeit von der Drehzahl des Verbrennungsmotor steuerbar sind.
